# EUROPEAN PATENT APPLICATION

(11) **EP 4 541 463 A1**
(43) Date of publication of application: **23.04.2025**
(21) Application number: 23203865.3
(22) Date of filing: 16.10.2023
(51) Int. Cl.: B01L 3/02, G01N 35/10

(54) **PIPETTE TIP WITH OUTSIDE SEALING COLLAR**

(71) Applicant: Tecan Trading AG, 8708 Männedorf (CH)
(72) Inventor: Sager, Adrian, 8708 Männedorf (CH)
(74) Representative: Sykora & König Patentanwälte PartG mbB

(57) **Abstract**

A pipette tip (10) comprises an elongated tubular body (12) with a head (14) for mounting the pipette tip (10) into a receptacle (52) of a pipetting device; wherein the tubular body (12) comprises an orifice (20) opposite to the head (14), whereby orifice (20) is connected via the tubular body (12) with an opening (16) in the head (14); wherein the head (14) comprises a sealing collar (24) surrounding the head (14); and wherein the sealing collar (24) is connected to the head (14) opposite to the orifice (20) and runs along the head (14) in direction to the orifice (20).

## Description

### FIELD OF THE INVENTION

The invention relates to a pipette tip, in particular to a pipette tip for a laboratory automation device.

### BACKGROUND OF THE INVENTION

Laboratory automation devices are used for automating laboratory processes, such as pipetting liquids between samples, liquid containers and wells as well as analyzing liquids. A laboratory automation device usually comprises a pipetting arm for carrying and automatically moving one or more pipette tips. With a pipetting head attached to the pipetting arm, the pipette tips may be gripped before use and disposed after use. Some pipette tips are gripped by inserting a connection piece into the collar of the pipette tips. The connecting piece may comprise one or more O-rings for air-tight sealing between the inner wall of the collar and the connecting piece. Other pipetting tips are gripped by inserting the upper end of the pipetting tips into receptacles of a pipetting head. The pipetting tips comprise sealing means like sealing lips.

For tightening against the receptacles in the pipetting head, the pipette tips comprise usually sealing lips, which surround an upper end of each pipette tip. When a pipette tip is inserted into the respective receptacle, the sealing lips turn or flip around, which results in a comparable large force, in particular, when a head is used, into which a plurality of pipette tips are inserted, such as a head with 384 receptacles.

Additionally, the injection moulding process of the pipette tips is rather complicated and time consuming, since a multi-component form with additional pieces for every lip has to be used.

US 6 955 077 B2 and US 2003 0 219 359 A1 describe pipette tips with a sealing lip on an inside of the pipette tip.

### DESCRIPTION OF THE INVENTION

It is an object of the invention to simplify the forming of pipette tips, to reduce the force for inserting a pipette tip into a receptacle of a pipetting arm and to increase the precision of the alignment of the pipette tip and the receptacle.

This object is achieved by the subject-matter of the independent claims. Further exemplary embodiments are evident from the dependent claims and the following description.

The invention relates to a pipette tip. In general, a pipette tip is a device used for pipetting liquids, which is attached to a pipetting head mounted on the arm of a laboratory automation device. The pipette tip has a hollow body for receiving the liquid and an orifice at one end for aspirating and dispensing the liquid. At the other end, the laboratory automation device is generating pressures different from ambient pressure inside the pipette tip, causing the aspirating or dispensing of the liquid. The pipette tip may be a disposable pipette tip, which may be connected to and disconnected from the laboratory automation device automatically.

According to an embodiment, the pipette tip comprises an elongated tubular body with a head for mounting the pipette tip into a receptacle of a pipetting device, wherein the tubular body comprises an orifice opposite to the head, which orifice is connected via the tubular body with an opening in the head. In general the pipette may be made one-piece of a plastics material, such as polypropylene. Furthermore, the pipette tip may be substantially rotationally symmetric around a middle axis. At the end, which is to be connected to the laboratory automation device, the tubular body has an opening, which is connected via the interior space of the tubular body with the orifice. The interior space of the tubular body is composed of cylindrical and/or conical sections.

It has to be understood that here and in the following, the term "cylindrical" refers also to surfaces that are conical but have an angle with respect to a middle axis of less than 3°.

According to an embodiment, the head comprises a sealing collar surrounding the head, wherein the sealing collar is connected to the head at a side opposite of the orifice (i.e. at the side of the opening) and runs along the head in direction to the orifice. The sealing collar may have a thickness such that it is flexible and can be bent towards the middle axis when the head is inserted into a receptacle of the laboratory automation device. The sealing collar slips within the receptacle and tightens against an interior wall of the receptacle.

Since the sealing collar runs along the head, i.e. substantially parallel to a surface of the head and/or to the middle axis of the pipette tip, it may have a larger area suitable for sealing compared to a sealing lip protruding orthogonally from the head. In such a way, a single sealing collar may already be enough to tighten the pipette tip against a receptacle of the laboratory automation device.

Additionally, it is possible that the head between the sealing collar and the opening towards the laboratory automation device has a surface, which fits into the receptacle without parts that need to be deformed, such as sealing lips. The guidance and/or alignment of the head in the receptacle can be improved.

Furthermore, the pipette tip can be injection-molded with a mold that is composed of solely two parts, which are closed against each other in axial direction. One part is used for forming the head, the other part is used for forming the rest of the pipette tip with the orifice and the collar. Standard injection molding tools may be used. This simplifies and increases the speed of manufacturing the pipette tips.

According to an embodiment, the sealing collar comprises a tubular sealing member which surrounds the head at a distance. The tubular sealing provides an outer surface which is intended to seal and/or tighten against an inner surface of the receptacle into which the head is plugged. The sealing member may be connected to the head via a ring with decreasing outer and inner radius with respect to the middle axis. When the head is plugged and/or moved into the receptacle, the ring and a part of the tubular sealing member slips within the receptacle and the part of the tubular sealing member is deformed towards the middle axis. The tubular sealing member then presses against an inner surface of the receptacle providing a seal.

According to an embodiment the tubular sealing member surrounds the head at a constant distance, at least partially along a section extending in axial direction. The tubular sealing member may have a cylindrical inner surface and a cylindrical outer surface. In such a way, a distance between the opening in the head and the area where the tubular sealing member presses against an inner surface of the receptacle may vary within a specific interval, which is defined by the length of the tubular sealing member.

On the one hand, this may be beneficial for counterbalancing manufacturing imprecisions. On the other hand, a pipetting head of the laboratory automation device with a plurality of receptacles may designed such that the borders of different receptacle which press against tubular sealing members are aligned in different heights. When such a head is lowered onto a plurality of pipette tips for mounting them the force for pressing the pipetting head against the pipette tips can be reduced. The length of the tubular sealing member defines the maximal possible distance of these borders.

According to an embodiment, the tubular sealing member has a constant thickness, at least partially along a section extending in axial direction. The thickness of the tubular sealing member may be thinner (such as at least 50% thinner) than a thickness of the material of the head below the tubular sealing member. In such a way, the tubular sealing member may be flexible, while the head may be substantially stiff. It is also possible that the sealing collar has a varying thickness.

According to an embodiment, a length of the tubular sealing member in an axial direction of the pipette tip is at least three times or at least five times a distance between the tubular sealing member and the head. As already described above, the length of the tubular sealing member defines the area, where the sealing collar can provide a seal against the interior of the receptacle.

According to an embodiment, an outer diameter (or radius with respect to the middle axis) of the head below the tubular sealing member is smaller than an outer diameter (or radius) of the head between the sealing collar and the opening in the head. As the cavity between the tubular sealing member and the head may need a specific thickness, this may allow to reduce the difference of the outer diameter (or radius) of the tubular sealing member and the outer diameter (or radius) of the head between the sealing collar and the opening in the head.

According to an embodiment, the sealing collar comprises a tubular positioning member which surrounds the head at a distance and which comprises an outer rim protruding in radial direction and facing towards the opening in the head. The tubular positioning member may be connected to the tubular sealing member of the sealing collar at a side towards the orifice. With respect to this embodiment the sealing collar may comprise a ring with increasing outer diameter (or radius) connected to the head, a tubular sealing member connected to the ring and having substantially constant outer diameter and a tubular positioning member with larger outer diameter (or radius) than the tubular sealing member. The outer rim may have a surface substantially orthogonal to the middle axis starting at the outer diameter (or radius) of the tubular sealing member and ending at the outer diameter (or radius) of the positioning member.

When the head of the pipette tip is moved into a receptacle of the laboratory automation device, the movement may be stopped by the rim which then touches the border of the receptacle.

According to an embodiment, the tubular positioning member comprises a further outer rim protruding in radial direction and facing towards the orifice. The further outer rim may be arranged opposite to the outer rim facing towards the opening. The further outer rim may have a surface substantially orthogonal to the middle axis starting at the outer diameter (or radius) of the tubular sealing member and ending at the outer diameter (or radius) of the positioning member. When the pipette tip is stacked in a tray comprising holes for accommodating pipetting tips, the further rim may prevent the pipette to fall through the tray.

According to an embodiment, an outer radius of the tubular positioning member is bigger than an outer radius of the tubular sealing member and/or an inner radius of the tubular positioning member is bigger than an inner radius of the tubular sealing member. It may be that a thickness of the tubular positioning member is substantially the same as of the tubular sealing member.

According to an embodiment, below the tubular sealing member and the tubular positioning member, the head has a cylindrical outer surface (or a constant outer radius with respect to the middle axis). The cavity below the sealing collar may have its largest thickness at the end of the tubular positioning member, this thickness then may reduce below the tubular sealing member and may shrink to 0, where the sealing collar is connected to the head. The surface of the cavity provided by the outer side of the head may be cylindrical. Such a cavity may easily be formed with injection molding.

According to an embodiment, the head has axial aligned fins protruding radially from a cylindrical member of the head. The sealing collar may be connected to the cylindrical member and may surround the cylindrical member. With the fins, the material thickness in this section of the pipette may be reduced. The outer surface of the fins provides a guidance for inserting the pipette tip into the receptacle of the laboratory automation device.

According to an embodiment, an outer diameter of the fins is smaller than an outer diameter of the sealing collar. In such away, the border of the receptacle can press the sealing collar inwards.

According to an embodiment, an outer diameter of the cylindrical member of the head is equal to an outer diameter of the head below the sealing collar. A substantial constant thickness of a wall of the pipette tip may be beneficial for injection molding.

According to an embodiment, an outer surface of the fins merges into an outer surface of the sealing collar. This may help guiding the border of receptacle above the sealing collar.

According to an embodiment, at the opening in the head an outer surface of the head is tapered (i.e. has a conical surface) such that an outer diameter of the head reduces towards the opening. This may help centering the head of the pipette tip in the receptacle.

According to an embodiment, at the opening in the head an inner surface of the head is tapered such that an inner diameter of the head increases towards the opening. This may help placing a filter inside the pipette tip.

According to an embodiment, in a section between the opening and an end of the sealing collar towards the orifice, an inner surface of the head is cylindrical. As already mentioned, in this section a filter may be placed into the pipette tip. After the cylindrical section, the inner surface may be conical towards the orifice.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 shows a pipette tip according to an embodiment of the invention.
Fig. 2a shows the head of a pipette tip according to an embodiment of the invention.
Fig. 2b shows a cross-sectional view of the head of Fig. 2a.
Fig. 3a shows the head of a pipette tip according to a further embodiment of the invention.
Fig. 3b shows a cross-sectional view of the head of Fig. 3a.
Fig. 4 shows a cross-sectional view of a part of the head of Fig. 2a to 3b.
Fig. 5 shows a cross-sectional view of the heads of several pipette tips according to an embodiment of the invention which are plugged into receptacles of a laboratory automation device.

The reference symbols used in the drawings and their meanings are listed in summary form in the list of reference symbols. In principle, identical parts are provided with the same reference symbols in the figures.

### DETAILED DESCRIPTION OF EXEMPLARY EMBODIMENTS

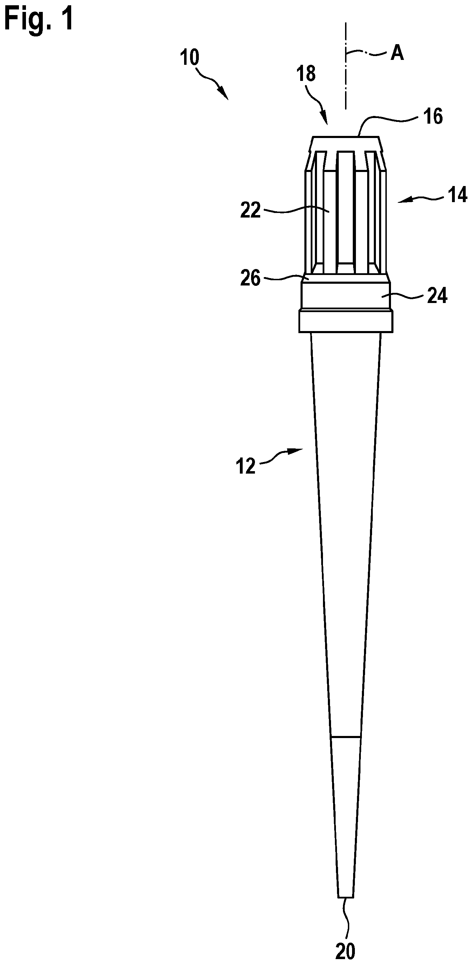

Fig. 1 shows a pipette tip 10 with an elongated tubular body 12 with a head 14 for mounting the pipette tip 10 into a receptacle of a pipetting device. The pipette tip 10 is made one piece from a plastics material, such as polypropylene, by injection moulding. The pipette tip 10 as well as the elongated tubular body 12 are substantially rotationally symmetric with respect to a middle axis of the pipette tip 10.

The elongated tubular body 12 has an opening 16 at the side of the head 14, which leads into tubular cavity 18 inside the elongated tubular body 12. At the other end opposite to the head, the tubular cavity ends in an orifice 20. The orifice 20 is connected via the tubular body 12 with the opening 16 in the head 14. By applying pressure bellow ambient pressure to the opening 16, a laboratory automation device into which the pipette 10 is plugged with its head 14 can aspirate liquid into the pipette tip 10, i.e. into the tubular cavity 18, and can dispense liquid from the pipette tip 10, i.e. from the tubular cavity 18 by applying pressure above ambient pressure.

The head 14 has a substantially cylindrical shape, while the section of the elongated tubular body 12 with the orifice 20 is substantially conical. Solely fins 22 at an outside of the head 14 which run in parallel to the axis A may break the rotational symmetry.

The head 14 furthermore comprises a sealing collar 24 surrounding the head 14. The sealing collar 24 is connected with a ring 26 to the head 14 at a side opposite of the orifice and runs along the head 14 in direction to the orifice 20.

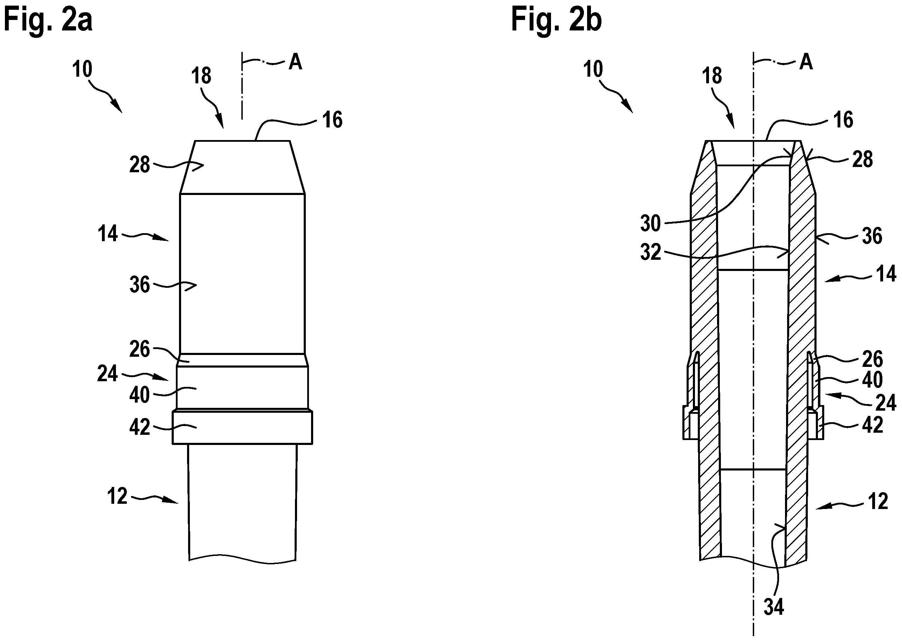

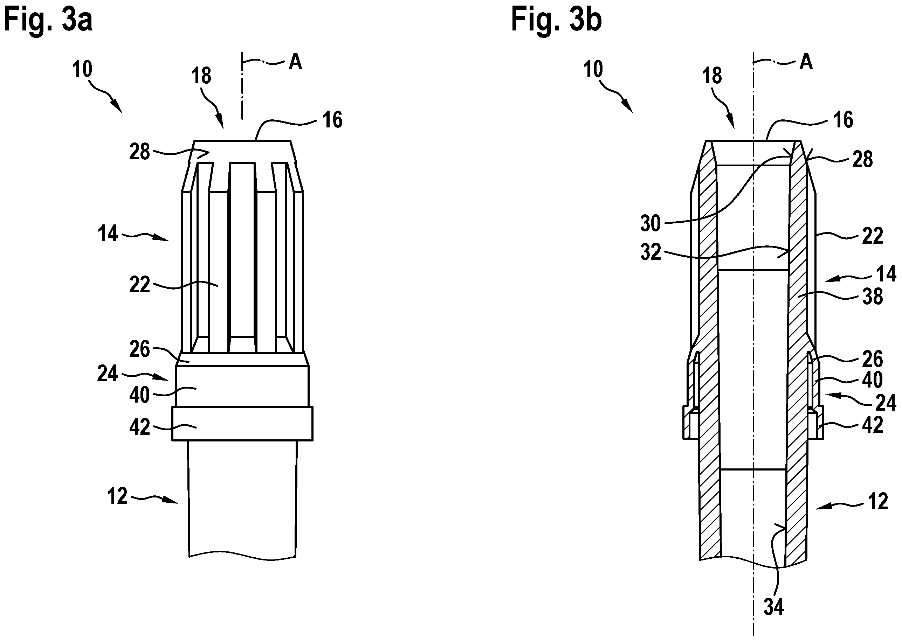

Fig. 2a and 2b show an embodiment of an upper part of a pipette tip 10 which has a head 14 with a cylindrical outer surface. Fig. 3a and 3b show an embodiment of an upper part of a pipette tip 10, which has a head 14 with fins 22.

In both embodiments, at the opening 16 an outer surface 28 of the head 14 is tapered, i.e. conical, such that an outer diameter of the head 14 reduces towards the opening 16. This may help inserting the head 14 into a receptacle of a laboratory automation device. Furthermore, at the opening 16 an inner surface 30 of the head 14 is tapered such that an inner diameter of the head 14 increases towards the opening 16. This may help inserting a filter into the tubular cavity 18 inside the head 14.

In a section of the pipette tip 10 between the opening 16 and an end of the sealing collar 24 towards the orifice 20, an inner surface 32 of the head 14 is cylindrical. Behind that, in a section of the pipette tip 10 behind the end of the sealing collar 24 towards the orifice 20, an inner surface 34 of the tubular cavity 18 is conical.

In the embodiment of Fig. 2a and 2b, the head 14 has a cylindrical outer surface 36 which is used for guiding the head 14 into the receptacle of the laboratory automation device.

In the embodiment of Fig. 3a and 3b, the head 14 has axially aligned fins 22 which protrude radially from a cylindrical member 38 of the head 14. At an inside, the cylindrical member 38 is defined by the inner surface 32. The outside of the cylindrical member is the surface of the head 14 besides the fins 22. The outer diameter of the cylindrical member 38 may be equal to an outer diameter of the head 14 below the sealing collar 24. In such a way, a substantially homogenous wall thickness may be achieved.

The outer surface of the fins 22 is used for guiding the head 14 into the receptacle of the laboratory automation device. An outer diameter of the fins 22 is smaller than an outer diameter of the sealing collar 24.

The outer surface of the fins 22 merges into an outer surface of the sealing collar 24 and in particular to an outer surface of the ring 26. With respect to Fig. 2a and 2b, the same applies to the outer surface 36 of the head 14.

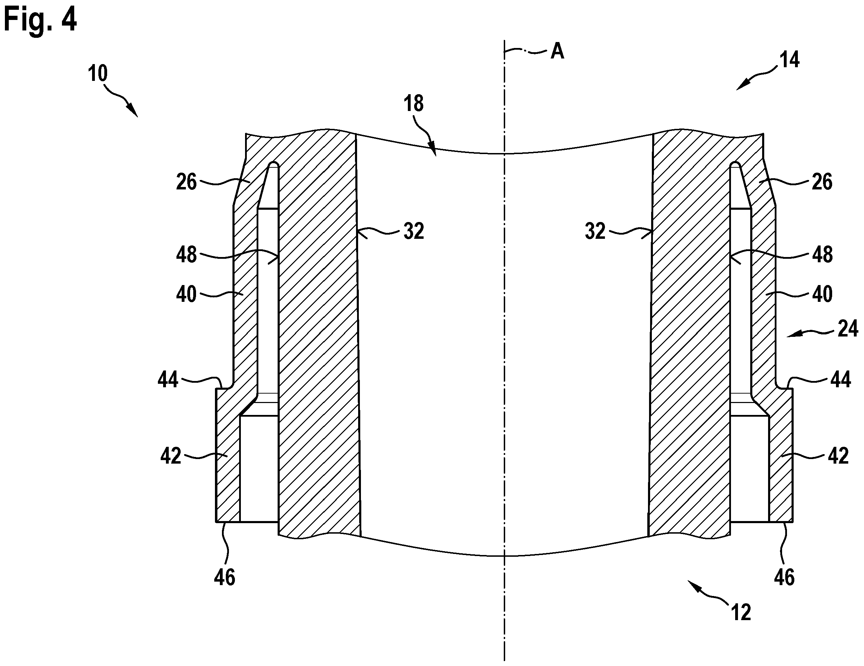

Fig. 4 shows the part of the pipette tip 10 with the sealing collar 24 in more detail. As can be seen, the sealing collar 24 is connected to the head 14 via the ring 26 which increases in diameter with respect to the axis A. The ring 26 turns into a tubular sealing member 40 of the sealing collar 24 which tubular sealing member 40 surrounds the head 14 at a distance. I.e. the tubular sealing member 40 is not directly connected to the head 14. The tubular sealing member 40 surrounds the head 14 at a constant distance, at least partially along a section extending in axial direction A. The tubular sealing member 40 has a constant thickness, at least partially along a section extending in axial direction A.

The tubular sealing member 40 extends in a direction towards the orifice 20. When the head 14 is inserted into the receptacle of the laboratory automation device, the tubular sealing member 40 is pressed towards the axis A and provides a sealing surface with respect to an inner surface of the receptacle. Since the tubular sealing member 40 extends in axial direction, this sealing surface may be substantially larger than a sealing provided by a sealing lip protruding in radial direction.

A length of the tubular sealing member 40 in an axial direction A of the pipette tip is much longer than its distance to the head 14. For example, the length is at least three times a distance between the tubular sealing member 40 and the head 14. In such way, a large sealing area, which is provided by the outside of the tubular sealing member 40, can be achieved.

As can be seen in Fig. 4 and also in Fig. 2a and 2b, an outer diameter of the head 14 below the tubular sealing member 40 may be smaller than an outer diameter of the head 14 between the sealing collar 24 and the opening 16 in the head 14. It also may be that an outer diameter of the head 14 below the tubular sealing member 40 is smaller than an outer diameter of the fins 22, such as shown in Fig. 3a and 3b. In such a way, the difference between the outer diameters of the guiding surface of the head 14 and the sealing surface of the tubular sealing member 40 can be reduced, which may help inserting the head 14 into the receptacle of the laboratory automation device.

The sealing collar furthermore comprises a tubular positioning member 42, which surrounds the head 14 at a distance. In particular, the tubular positioning member 42 is connected to the tubular sealing member 40 of the sealing collar 24. When one moves in direction to the orifice 20, the tubular sealing member 40 turns into the tubular positioning member 42.

The tubular positioning member 42 comprises an outer rim 44, which protrudes in radial direction and faces towards the opening 16 in the head 14. This rim 44 provides a stop for the movement of the head 14 into the receptacle of the laboratory automation device.

The tubular positioning member 42 comprises a further outer rim 46 which protrudes in radial direction and faces towards the orifice 20. This rim 46 provides a stop for the pipette tip 10 when the pipette tip 10 is stored on a tray.

Both the outer radius and the inner radius of the tubular positioning member 42 are bigger than an outer radius and an inner radius of the tubular sealing member 40. The tubular positioning member 42 has substantially the same thickness as the tubular sealing member 40.

Below the ring 26, the tubular sealing member 40 and the tubular positioning member 42, the head 14 has a cylindrical outer surface 48. With inner surface of the ring 26, the tubular sealing member 40 and the tubular positioning member 42, which increases in radius and/or diameter in a direction towards the orifice 20, a cavity with increasing width is formed which easily can be produced in an injection moulding process. The width of the cavity below the tubular sealing member 40 may be substantially the thickness of the tubular sealing member 40. The width of the cavity below the tubular positioning member 42 may be substantially twice the width of the cavity below the tubular sealing member 40 or more.

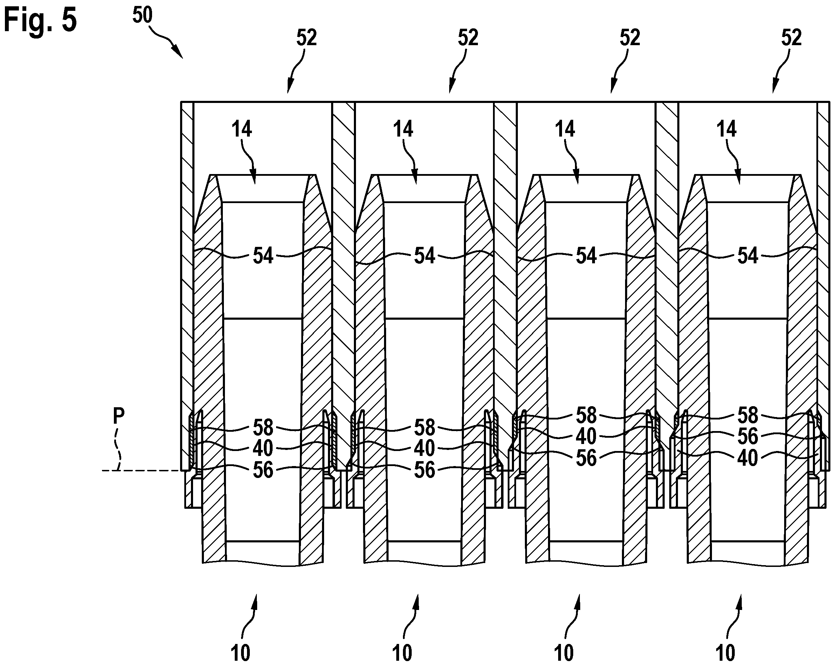

Fig. 5 shows a cross-sectional view of a part of a pipetting head 50 of a laboratory automation device. The pipetting head 50 has one or a plurality of receptacles 52 for receiving the heads 14 of pipette tips 10. Each receptacle 52 has an inner wall 54 with substantially the same diameter as an outer diameter of the head 14. The receptacles 52 all end in one plane P defined by the lower end of pipetting head 50. At a specific distance from this plane P, each receptacle 52 has a rim 56 where the inner diameter of the receptacle 52 reduces to the diameter of the inner wall 54. At this rim 56, the sealing collar 24 and in particular the tubular sealing member 40 is pressed towards the axis A and a sealing area 58 is formed between the inner wall 54 and the sealing collar 24.

As shown in Fig. 5, the distance of the rim 56 from the plane P may vary, thus reducing the overall force when a plurality of pipetting tips 10 are inserted into the receptacles 52. This distance may vary in a range having the length of the tubular sealing member 40.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: pipette tip
- 12: tubular body
- 14: head
- 16: opening
- 18: tubular cavity
- 20: orifice
- 22: fin
- 24: sealing collar
- 26: ring
- A: axis
- 28: outer surface
- 30: inner surface
- 32: inner surface
- 34: inner surface
- 36: outer surface
- 38: cylindrical member
- 40: tubular sealing member
- 42: tubular positioning member
- 44: outer rim
- 46: further rim
- 48: outer surface
- 50: pipetting head
- 52: receptacle
- 54: inner wall
- 56: rim
- 58: sealing area
- P: plane

## Claims

1. A pipette tip (10),
wherein the pipette tip (10) comprises an elongated tubular body (12) with a head (14) for mounting the pipette tip (10) into a receptacle (52) of a pipetting device;
wherein the tubular body (12) comprises an orifice (20) opposite to the head (14), which orifice (20) is connected via the tubular body (12) with an opening (16) in the head (14);
wherein the head (14) comprises a sealing collar (24) surrounding the head (14);
wherein the sealing collar (24) is connected to the head (14) opposite to the orifice (20) and runs along the head (14) in direction to the orifice (20).

2. The pipette tip (10) of claim 1,
wherein the sealing collar (24) comprises a tubular sealing member (40), which surrounds the head (14) at a distance.

3. The pipette tip (10) of claim 2,
wherein the tubular sealing member (40) surrounds the head (14) at a constant distance, at least partially along a section extending in axial direction (A).

4. The pipette tip (10) of claim 2 or 3,
wherein the tubular sealing member (40) has a constant thickness, at least partially along a section extending in axial direction (A).

5. The pipette tip (10) of one of claims 2 to 4,
wherein a length of the tubular sealing member (40) in an axial direction (A) of the pipette tip is at least three times a distance between the tubular sealing member (40) and the head (14).

6. The pipette tip (10) of one of claims 2 to 5,
wherein an outer diameter of the head (14) below the tubular sealing member (40) is smaller than an outer diameter of the head (14) between the sealing collar (24) and the opening (16) in the head (14).

7. The pipette tip (10) of one of the previous claims,
wherein the sealing collar (24) comprises a tubular positioning member (42), which surrounds the head (14) at a distance and which comprises an outer rim (44) protruding in radial direction and facing towards the opening (16) in the head (14).

8. The pipette tip (10) of claim 7,
wherein the tubular positioning member (42) comprises a further outer rim (46) protruding in radial direction and facing towards the orifice (20).

9. The pipette tip (10) of claim 7 or 8,
wherein the tubular positioning member (42) is connected to a tubular sealing member (40) of the sealing collar (24).

10. The pipette tip (10) of claim 9,
wherein an outer radius of the tubular positioning member (42) is bigger than an outer radius of the tubular sealing member (40);
wherein an inner radius of the tubular positioning member (42) is bigger than an inner radius of the tubular sealing member (40).

11. The pipette tip (10) of claim 9 or 10,
wherein below the tubular sealing member (40) and the tubular positioning member (42), the head (14) has a cylindrical outer surface (48).

12. The pipette tip (10) of one of the previous claims,
wherein the head (14) has axially aligned fins (22) protruding radially from a cylindrical member (38) of the head (14);
wherein an outer diameter of the fins (22) is smaller than an outer diameter of the sealing collar (24);
wherein an outer diameter of the cylindrical member (38) is equal to an outer diameter of the head (14) below the sealing collar (24).

13. The pipette tip (10) of claim 12,
wherein an outer surface of the fins (22) merges into an outer surface of the sealing collar (24).

14. The pipette tip (10) of one of the previous claims,
wherein at the opening (16), an outer surface (28) of the head (14) is tapered, such that an outer diameter of the head (14) reduces towards the opening (16);
wherein at the opening (16) an inner surface (30) of the head is tapered such that an inner diameter of the head (14) increases towards the opening (16).

15. The pipette tip (10) of one of the previous claims,
wherein in a section between the opening (16) and an end of the sealing collar (24) towards the orifice (20) an inner surface (32) of the head (14) is cylindrical.
